# EUROPEAN PATENT APPLICATION

(11) **EP 4 779 468 A1**
(43) Date of publication of application: **22.07.2026**
(21) Application number: 24887684.9
(22) Date of filing: 09.10.2024
(51) Int. Cl.: G06F 9/455

(54) **INFORMATION PROCESSING METHOD AND APPARATUS, AND DEVICE AND READABLE STORAGE MEDIUM**

(30) Priority: 08.11.2023 CN 202311481835
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: DING, Hanyu, Beijing 100032 (CN); CHEN, Yanjun, Beijing 100032 (CN); GUAN, Yunxia, Beijing 100032 (CN); ZHANG, Tingting, Beijing 100032 (CN)
(74) Representative: Murgitroyd & Company
(86) International application number: PCT/CN2024/123516
(87) International publication number: WO 2025/098070

(57) **Abstract**

An information processing method and apparatus, a device, and a readable storage medium are provided, and relate to the field of communication technologies. The method includes: receiving a first message, wherein the first message includes information of a first namespace and is used for creating the first namespace; determining, according to the first message and information of namespaces of clusters, whether a second namespace exists in the clusters, wherein information of the second namespace conflicts with the information of the first namespace.

## Description

### CROSS-REFERENCE TO RELATED APPLICATION

This application claims priority to Chinese Patent Application No. 202311481835.9 filed in China on November 8, 2023, a disclosure of which is incorporated herein by reference in its entirety.

### TECHNICAL FIELD

The present disclosure relates to the field of communication technologies, and in particular, to an information processing method and apparatus, a device, and a readable storage medium.

### BACKGROUND

Kubernetes (K8s), as a core technology, has become the foundation of modern application architectures, and using Kubernetes as a container orchestration system has become an inevitable choice for an increasing number of enterprises.

A namespace is an abstract integration of a group of resources and objects in a K8s cluster. In the K8s cluster, a user can create different namespaces, and data in different namespaces are isolated from each other. The namespace mainly has the following two functions.
1. Resource isolation: a virtual cluster space can be provided for different teams or projects, and resources of the same Kubernetes cluster are shared. For example, different namespaces can be created for development and testing environments, which are isolated from each other without mutual influence. A resource quota can be used to constrain resource allocation and usage of the namespace.
2. Permission control: it is possible to specify the users who can access a namespace and the users who cannot access the namespace.

In a single cluster, each workload added to the Kubernetes cluster must be placed in a namespace, and namespaces in each cluster are unique. Similarly, in multiple clusters, each workload added to the Kubernetes cluster generally also needs to be placed in a namespace, and namespaces among clusters must also be unique relative to each other.

A namespace is generally created and named by a user. In a multi-cluster environment, namespaces in two clusters may be identical, thereby causing namespace conflicts among multiple clusters.

### SUMMARY

An information processing method and apparatus, a device, and a readable storage medium are provided in the embodiments of the present disclosure to solve the problem of namespace conflict among multiple clusters.

In a first aspect, an information processing method is provided in the embodiments of the present disclosure, applied to an inter-cloud resource manager, including:
receiving a first message, wherein the first message includes information of a first namespace and is used for creating the first namespace;
determining, according to the first message and information of namespaces of clusters, whether a second namespace exists in the clusters, wherein information of the second namespace conflicts with the information of the first namespace.

Optionally, the method further includes:
obtaining the information of the namespaces of the clusters and/or available resource information of the clusters.

Optionally, obtaining the information of the namespaces of the clusters includes:
obtaining the information of the namespaces of the clusters via Application Program Interface (API) servers of the clusters.

Optionally, the information of the first namespace includes a name of the first namespace;
determining, according to the first message and the information of the namespaces of the clusters, whether the second namespace exists in the clusters includes:
determining, according to the first message and the information of the namespaces of the clusters, whether the second namespace exists in the clusters, wherein a name of the second namespace is identical to the name of the first namespace.

Optionally, the information of the first namespace further includes a resource upper limit of the first namespace; the method further includes:
when the second namespace does not exist, determining information of remaining available resource of a first target cluster according to available resource information of the first target cluster and information of namespace of the first target cluster;
when it is determined that the remaining available resource of the first target cluster meets the resource upper limit of the first namespace, creating the first namespace in the first target cluster.

Optionally, the information of the namespaces of the clusters includes one or more of:
namespace information, a resource upper limit of the namespace, or information of actual running resource of the namespace.

Optionally, the namespace information includes one or more of:
a name of the namespace, a status of the namespace, or time since creation of the namespace.

Optionally, the method further includes:
when the second namespace exists, sending a second message;
wherein the second message is used for indicating that the second namespace exists in one or more clusters.

In a second aspect, an information processing method is provided in the embodiments of the present disclosure, applied to a cluster, including:
sending information of namespace of the cluster to an inter-cloud resource manager, wherein the information of the namespace of the cluster is used by the inter-cloud resource manager to determine whether a second namespace exists in the cluster, information of the second namespace conflicts with information of a first namespace, and the information of the first namespace is carried in a first message used for creating the first namespace.

Optionally, sending the information of the namespace of the cluster to the inter-cloud resource manager includes:
obtaining, via an etcd component in the cluster, the information of the namespace of the cluster from a controller manager;
sending, via the etcd component, the information of the namespace of the cluster to an API server of the cluster;
sending, via the API server, the information of the namespace of the cluster to the inter-cloud resource manager.

Optionally, the information of the namespace of the cluster includes one or more of:
namespace information, a resource upper limit of the namespace, or information of actual running resource of the namespace.

Optionally, the namespace information includes one or more of:
a name of the namespace, a status of the namespace, or time since creation of the namespace.

In a third aspect, an information processing apparatus is provided in the embodiments of the present disclosure, applied to an inter-cloud resource manager, including:
a first receiving module, configured to receive a first message, wherein the first message includes information of a first namespace and is used for creating the first namespace;
a first determining module, configured to determine, according to the first message and information of namespaces of clusters, whether a second namespace exists in the clusters, wherein information of the second namespace conflicts with the information of the first namespace.

Optionally, the apparatus further includes:
a first obtaining module, configured to obtain the information of the namespaces of the clusters.

Optionally, the first obtaining module is further configured to:
obtain the information of the namespaces of the clusters via API servers of the clusters.

Optionally, the information of the first namespace includes a name of the first namespace; the first determining module is further configured to determine, according to the first message and the information of the namespaces of the clusters, whether the second namespace exists in the clusters, wherein a name of the second namespace is identical to the name of the first namespace.

Optionally, the information of the first namespace further includes a resource upper limit of the first namespace; the apparatus further includes:
a second obtaining module, configured to, when the second namespace does not exist, determine information of remaining available resource of a first target cluster according to available resource information of the first target cluster and information of namespace of the first target cluster;
a first creation module, configured to, when it is determined that the remaining available resource of the first target cluster meets the resource upper limit of the first namespace, create the first namespace in the first target cluster.

Optionally, the information of the namespaces of the clusters includes one or more of:
namespace information, a resource upper limit of the namespace, or information of actual running resource of the namespace.

Optionally, the namespace information includes one or more of:
a name of the namespace, a status of the namespace, or time since creation of the namespace.

Optionally, the apparatus further includes:
a first sending module, configured to, when the second namespace exists, send a second message;
wherein the second message is used for indicating that the second namespace exists in one or more clusters.

In a fourth aspect, an information processing apparatus is provided in the embodiments of the present disclosure, applied to a cluster, including:
a first sending module, configured to send information of namespace of the cluster to an inter-cloud resource manager, wherein the information of the namespace of the cluster is used by the inter-cloud resource manager to determine whether a second namespace exists in the cluster, information of the second namespace conflicts with information of a first namespace, and the information of the first namespace is carried in a first message used for creating the first namespace.

Optionally, the first sending module is further configured to:
obtain, via an etcd component in the cluster, the information of the namespace of the cluster from a controller manager;
send, via the etcd component, the information of the namespace of the cluster to an API server of the cluster;
send, via the API server, the information of the namespace of the cluster to the inter-cloud resource manager.

Optionally, the information of the namespace of the cluster includes one or more of:
namespace information, a resource upper limit of the namespace, or information of actual running resource of the namespace.

Optionally, the namespace information includes one or more of:
a name of the namespace, a status of the namespace, or time since creation of the namespace.

In a fifth aspect, an information processing apparatus is provided in the embodiments of the present disclosure, applied to an inter-cloud resource manager, including: a processor and a transceiver;
wherein the transceiver is configured to receive a first message, wherein the first message includes information of a first namespace and is used for creating the first namespace;
the processor is configured to determine, according to the first message and information of namespaces of clusters, whether a second namespace exists in the clusters, wherein information of the second namespace conflicts with the information of the first namespace.

Optionally, the processor is further configured to:
obtain the information of the namespaces of the clusters.

Optionally, the processor is further configured to:
obtain the information of the namespaces of the clusters via API servers of the clusters.

Optionally, the information of the first namespace includes a name of the first namespace; optionally, the processor is further configured to:
determine, according to the first message and the information of the namespaces of the clusters, whether the second namespace exists in the clusters, wherein a name of the second namespace is identical to the name of the first namespace.

Optionally, the information of the first namespace further includes a resource upper limit of the first namespace; optionally, the processor is further configured to:
when the second namespace does not exist, determine information of remaining available resource of a first target cluster according to available resource information of the first target cluster and information of namespace of the first target cluster;
when it is determined that the remaining available resource of the first target cluster meets the resource upper limit of the first namespace, create the first namespace in the first target cluster.

Optionally, the information of the namespaces of the clusters includes one or more of:
namespace information, available resource information of a cluster, a resource upper limit of the namespace, or information of actual running resource of the namespace.

Optionally, the namespace information includes one or more of:
a name of the namespace, a status of the namespace, or time since creation of the namespace.

Optionally, the processor is further configured to:
when the second namespace exists, send a second message;
wherein the second message is used for indicating that the second namespace exists in one or more clusters.

In a sixth aspect, an information processing apparatus is provided in the embodiments of the present disclosure, applied to a cluster, including: a processor and a transceiver;
wherein the transceiver is configured to send information of namespace of the cluster to an inter-cloud resource manager, wherein the information of the namespace of the cluster is used by the inter-cloud resource manager to determine whether a second namespace exists in the cluster, information of the second namespace conflicts with information of a first namespace, and the information of the first namespace is carried in a first message used for creating the first namespace.

Optionally, the transceiver is further configured to:
obtain, via an etcd component in the cluster, the information of the namespace of the cluster from a controller manager;
send, via the etcd component, the information of the namespace of the cluster to an API server of the cluster;
send, via the API server, the information of the namespace of the cluster to the inter-cloud resource manager.

Optionally, the information of the namespace of the cluster includes one or more of:
namespace information, a resource upper limit of the namespace, or information of actual running resource of the namespace.

Optionally, the namespace information includes one or more of:
a name of the namespace, a status of the namespace, or time since creation of the namespace.

In a seventh aspect, a communication device is further provided in the embodiments of the present disclosure, including: a memory, a processor, and a program stored in the memory and executable on the processor; wherein the processor is configured to read the program stored in the memory to implement the steps of the information processing method as described above.

In an eighth aspect, a readable storage medium is further provided in the embodiments of the present disclosure, wherein the readable storage medium stores a program, and the program, when executed by a processor, implements the steps of the information processing method as described above.

In the embodiments of the present disclosure, the inter-cloud resource manager can determine, according to the information of the first namespace in the first message and the information of the namespaces of the clusters, whether the second namespace exists in the clusters, wherein the information of the second namespace conflicts with the information of the first namespace. Thus, by using the solutions of the embodiments of the present disclosure, the problem of namespace conflict among multiple clusters can be solved.

### BRIEF DESCRIPTION OF THE DRAWINGS

FIG. 1 is a flowchart of an information processing method provided by an embodiment of the present disclosure;
FIG. 2 is another flowchart of an information processing method provided by an embodiment of the present disclosure;
FIG. 3 is a schematic diagram of a processing system according to an embodiment of the present disclosure;
FIG. 4 is a schematic diagram of a process in which an inter-cloud resource manager obtains information of namespaces of clusters according to an embodiment of the present disclosure;
FIG. 5 is a schematic diagram of a process in which an inter-cloud resource manager creates a namespace according to an embodiment of the present disclosure;
FIG. 6 is a structural diagram of an information processing apparatus provided by an embodiment of the present disclosure;
FIG. 7 is another structural diagram of an information processing apparatus provided by an embodiment of the present disclosure;
FIG. 8 is yet another structural diagram of an information processing apparatus provided by an embodiment of the present disclosure;
FIG. 9 is still yet another structural diagram of an information processing apparatus provided by an embodiment of the present disclosure.

### DETAILED DESCRIPTION

In the embodiments of the present disclosure, the term "and/or" describes the association relationship between associated objects, indicating that there can be three relationships, for example, A and/or B can mean: A exists alone, A and B exist simultaneously, and B exists alone. Additionally, the symbol "/" generally indicates that the associated objects are in an "or" relationship.

In the embodiments of the present disclosure, the term "plurality" refers to two or more than two, and other quantifiers are similar to it.

The technical solutions in the embodiments of the present disclosure will be clearly and thoroughly described below with reference to the accompanying drawings in the embodiments of the present disclosure. Obviously, the described embodiments are only some of the embodiments of the present disclosure, not all of them. Based on the embodiments in the present disclosure, all other embodiments obtained by those of ordinary skill in the art without making creative efforts fall within the scope of the present disclosure.

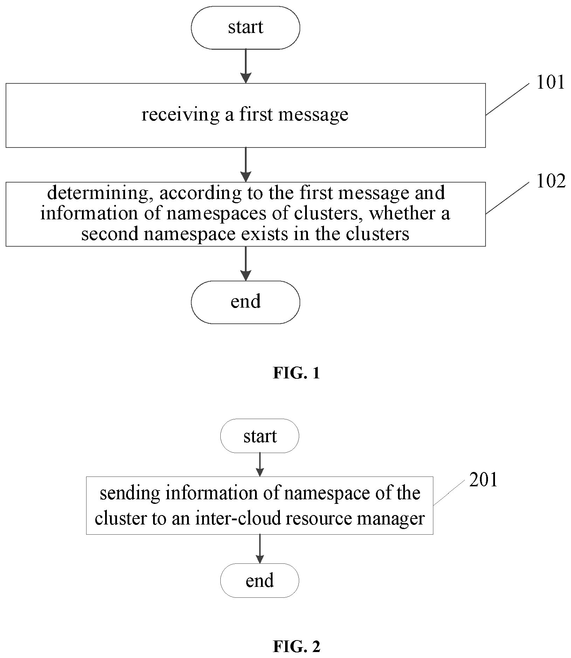

Referring to FIG. 1, FIG. 1 is a flowchart of an inter-cloud resource manager provided by an embodiment of present disclosure, applied to an inter-cloud resource manager. As shown in FIG. 1, the method includes the following steps.

Step 101: receiving a first message, wherein the first message includes information of a first namespace and is used for creating the first namespace.

In the embodiments of the present disclosure, the inter-cloud resource manager may be disposed in any cluster. The information of the first namespace may include a name of the first namespace, and may further include a resource upper limit of the first namespace. The resource upper limit may be understood as a maximum resource requirement of the first namespace.

Step 102: determining, according to the first message and information of namespaces of clusters, whether a second namespace exists in the clusters, wherein information of the second namespace conflicts with the information of the first namespace.

Optionally, in the embodiments of the present disclosure, the inter-cloud resource manager may further obtain the information of the namespaces of the clusters and/or available resource information of the clusters. Specifically, the inter-cloud resource manager may obtain the information of the namespaces of the clusters and/or the available resource information of the clusters via API servers of the clusters. The information of the namespaces of the clusters includes one or more of: namespace information, a resource upper limit of the namespace, or information of actual running resource of the namespace. The namespace information includes one or more of: a name of the namespace, a status of the namespace (e.g., Active, Inactive, etc.), or time since creation of the namespace.

When the information of the first namespace includes the name of the first namespace, in this step, the inter-cloud resource manager may determine, according to the first message and the information of the namespaces of the clusters, whether the second namespace exists in the clusters, wherein a name of the second namespace is identical to the name of the first namespace. For example, the inter-cloud resource manager may compare the name of the first namespace with names of namespaces of the clusters respectively. When the name of the first namespace already exists, it indicates that the second namespace exists in the clusters; otherwise, it indicates that the second namespace does not exist in the clusters.

When the second namespace exists, the inter-cloud resource manager may send a second message, wherein the second message is used for indicating that the second namespace exists in one or more clusters. For example, it may indicate information of the cluster in which the second namespace exists, such as an identifier of the cluster, and may also include a suggested namespace name, etc. When the second namespace exists and the status of the second namespace is Inactive, the status of the second namespace may also be indicated in the second message.

When the second namespace does not exist, the first namespace may be created. Optionally, to improve the success rate of creation, when the information of the first namespace further includes the resource upper limit of the first namespace, the inter-cloud resource manager may further determine information of remaining available resource of a first target cluster according to available resource information of the first target cluster and information of namespace of the first target cluster, wherein the first target cluster is one or more of the clusters, and may be determined by the inter-cloud resource manager according to a user's selection, or may be determined by the inter-cloud resource manager based on a policy (e.g., selecting a cluster that currently has fewer namespaces). The information of remaining available resource of the first target cluster may be understood as resources that can be allocated to a newly created namespace.

When it is determined that the remaining available resource of the first target cluster meets the resource upper limit of the first namespace, the first namespace is created in the first target cluster. When the information of the first namespace does not include the resource upper limit of the first namespace, the inter-cloud resource manager may allocate corresponding resources to the first namespace according to remaining resource conditions of the clusters.

For example, remaining available resource of the first target cluster = available resource of the first target cluster - {sum of resource upper limits of all namespaces in the first target cluster - resource actually in use in all namespaces in the first target cluster}. The resources include, but are not limited to, Central Processing Unit (CPU) and memory.

When an amount of remaining available resource of the first target cluster is less than the resource upper limit of the first namespace, the remaining available resource of the first target cluster cannot satisfy the requirement of the first namespace; otherwise, it is determined that requirements for creating the first namespace can be satisfied. When it is determined that the remaining available resource of the first target cluster meets the resource upper limit of the first namespace, the first namespace is created in the first target cluster.

Afterwards, the inter-cloud resource manager may send, according to whether the first namespace is successfully created, a message to the user for indicating success or failure of namespace creation.

Here, by comparing, via the inter-cloud resource manager, a resource constraint of the namespace with the remaining available resource of the cluster, the namespace resource constraint configuration process can be updated to avoid the problem of first-come-first-served namespace resource competition in an existing cluster management mechanism.

In the embodiments of the present disclosure, the inter-cloud resource manager can determine, according to the information of the first namespace in the first message and the information of the namespaces of the clusters, whether the second namespace exists in the clusters, wherein the information of the second namespace conflicts with the information of the first namespace. Thus, by using the solutions of the embodiments of the present disclosure, the problem of namespace conflict among multiple clusters can be solved.

Referring to FIG. 2, FIG. 2 is a flowchart of an information processing method provided by an embodiment of the present disclosure, applied to a cluster. As shown in FIG. 2, the method includes the following step.

Step 201: sending information of namespace of the cluster to an inter-cloud resource manager, wherein the information of the namespace of the cluster is used by the inter-cloud resource manager to determine whether a second namespace exists in the cluster, information of the second namespace conflicts with information of a first namespace, and the information of the first namespace is carried in a first message used for creating the first namespace.

Optionally, in this step, the cluster may obtain, via an etcd component in the cluster, the information of the namespace of the cluster from a controller manager; send, via the etcd component, the information of the namespace of the cluster to an API server of the cluster; and send, via the API server, the information of the namespace of the cluster to the inter-cloud resource manager.

The information of the namespace of the cluster includes one or more of:
namespace information, a resource upper limit of the namespace, or information of actual running resource of the namespace. The namespace information includes one or more of: a name of the namespace, a status of the namespace, or time since creation of the namespace.

In the embodiments of the present disclosure, the inter-cloud resource manager can determine, according to the information of the first namespace in the first message and the information of the namespaces of the clusters, whether the second namespace exists in the clusters, wherein the information of the second namespace conflicts with the information of the first namespace. Thus, by using the solutions of the embodiments of the present disclosure, the problem of namespace conflict among multiple clusters can be solved.

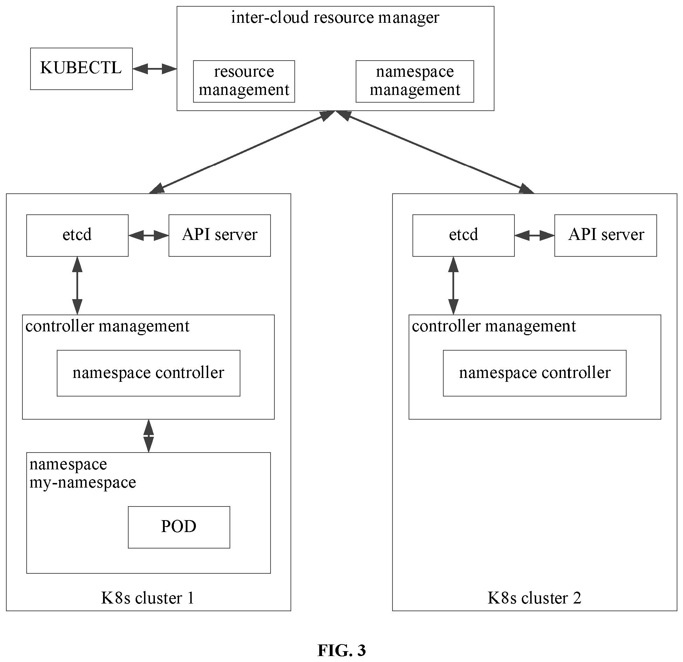

As shown in FIG. 3, FIG. 3 is a schematic diagram of a processing system according to an embodiment of the present disclosure. The system may include an inter-cloud resource manager and multiple K8s clusters, such as K8s cluster 1, K8s cluster 2, etc.

The inter-cloud resource manager may include a resource management module and a namespace management module. The resource management module may be configured to manage obtained resources of clusters, and the namespace management module may be configured to manage obtained information of namespaces of clusters.

A K8s cluster may include an etcd component, an API server, a controller manager, etc. The controller manager may further include a namespace controller.

In the system shown in FIG. 3, a command for creating a namespace input by a user is received via kubectl, for example, the command may include a name of a namespace to be created, such as: my-namespace. The inter-cloud resource manager obtains, via the API server of each cluster, information of namespaces of clusters in advance, and after receiving the user's command, compares and queries the user's command with the above information. When a namespace named my-namespace already exists in a certain cluster, an indication that the namespace cannot be created may be returned; when the namespace my-namespace does not exist, it may be determined whether remaining allocatable resources of a certain cluster or all clusters meet the resource upper limit requirement of the my-namespace to be created. When the remaining allocatable resources (e.g., CPU, memory, etc.) of a certain cluster or all clusters are greater than the resource upper limit of the my-namespace to be created, the creation may be successful; otherwise, the creation fails. Assuming that cluster 1 already has a namespace named my-namespace, the namespace cannot be created.

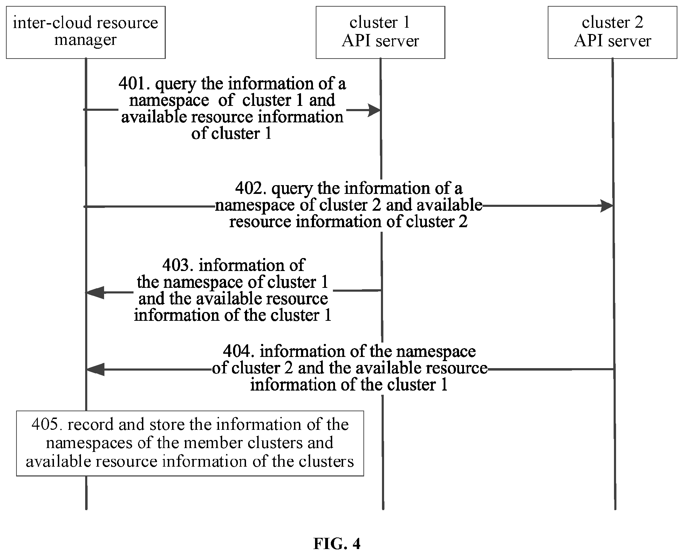

As shown in FIG. 4, FIG. 4 is a schematic diagram of a process in which an inter-cloud resource manager obtains information of namespaces of clusters according to an embodiment of the present disclosure. In this embodiment, two clusters are taken as an example for description. The process may include the following steps.

Step 401: the inter-cloud resource manager iteratively queries, via a Hypertext Transfer Protocol (HTTP) Application Programming Interface (API), information of a namespace of cluster 1 and available resource information of cluster 1, such as a name of the namespace, a resource upper limit of the corresponding namespace, and information of actual running resource of the namespace. Optionally, it may further include a status of the namespace, time since creation, etc.

Step 402: the inter-cloud resource manager iteratively queries, via an HTTP API, information of a namespace of cluster 2 and available resource information of cluster 2, such as a name of the namespace, available resource information of the cluster, a resource upper limit of the corresponding namespace, and information of actual running resource of the namespace. Optionally, it may further include a status of the namespace, time since creation, etc.

There is no strict sequence between step 401 and step 402.

Step 403: cluster 1 queries and returns the information of the namespace of cluster 1, the available resource information of the cluster, the resource upper limit of the corresponding namespace, and the information of actual running resource of the namespace. Optionally, it may further include a status of the namespace, time since creation, etc.

Specifically, the API server of cluster 1 performs a Remote Procedure Call (RPC) interaction with the K8s etcd component to obtain the above information of all namespaces in the cluster.

Step 404: cluster 2 queries and returns the information of the namespace of cluster 2, the available resource information of the cluster, the resource upper limit of the corresponding namespace, and the information of actual running resource of the namespace. Optionally, it may further include a status of the namespace, time since creation, etc.

Specifically, the API server of cluster 2 performs an RPC interaction with the K8s etcd component to obtain the above information of all namespaces in the cluster.

There is no strict sequence between step 403 and step 404.

Step 405: the inter-cloud resource manager records and stores the information of the namespaces of the member clusters. In addition, the inter-cloud resource manager may periodically update the database, e.g., every 1 hour, or may manually trigger an update.

Table 1 shows an example of information of namespaces of clusters obtained by the inter-cloud resource manager.

**Table 1**

| cluster | namespace | status | age (time since creation) |
|---|---|---|---|
| member 1 | default | active | 20d |
| member 2 | my-namespace | active | 10m |
| member 3 | default | active | 22d |
| member4 | test | active | 15m |

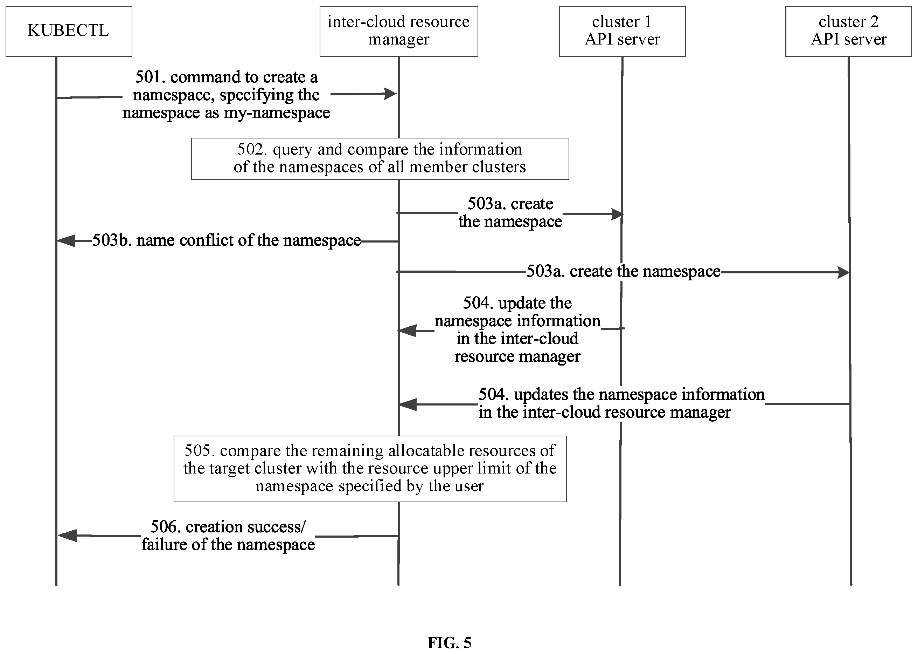

As shown in FIG. 5, FIG. 5 is a schematic diagram of a process in which an inter-cloud resource manager creates a namespace according to an embodiment of the present disclosure. The process may include the following steps.

Step 501: a kubectl user sends a command to create a namespace, specifying the namespace as my-namespace.

Step 502: the inter-cloud resource manager queries and compares the information of the namespaces of all member clusters. The inter-cloud resource manager has already recorded and stored the information of the namespaces of the clusters.

Step 503a: when no conflict exists, the inter-cloud resource manager creates the namespace based on a target cluster or all clusters selected by the user, or based on a target cluster or all clusters determined by the inter-cloud resource manager.

Step 503b: when a conflict exists, the inter-cloud resource manager indicates to the user that there is a namespace name conflict, and returns a modification suggestion (e.g., appending "0X" to the namespace requested by the user, where X is an Arabic numeral starting from 1). Assuming that the information stored in the inter-cloud resource manager is as shown in Table 1, and a namespace named my-namespace already exists in member 3, it indicates that a conflict exists, and the inter-cloud resource manager may indicate to the user that there is a namespace name conflict and return a modification suggestion.

Step 504: after the namespace is successfully created, cluster 1 or cluster 2 actively updates the namespace information in the inter-cloud resource manager.

Step 505: the inter-cloud resource manager compares the remaining allocatable resources of the target cluster with the resource upper limit of the namespace specified by the user;
wherein remaining allocatable resources of the cluster = available resources (CPU, memory, etc.) of the cluster -{sum of resource upper limits of all namespaces in the cluster - resource actually in use in all namespaces in the cluster}.

Step 506: when the remaining allocatable resources meet the resource upper limit requirement of the namespace specified by the user, the inter-cloud resource manager returns a success indication for creation; otherwise, it returns a failure indication for creation.

From the above description, it can be seen that by using the solutions of the embodiments of the present disclosure, the namespace information of multiple container clusters can be prestored via the inter-cloud resource manager and compared with the namespace information to be created by the user, thereby solving the problem of namespace conflict among multiple K8s clusters. Meanwhile, by comparing, via the inter-cloud resource manager, a resource constraint of the namespace with the remaining available resource of the cluster, the namespace resource constraint configuration process is updated to avoid the problem of first-come-first-served namespace resource competition in an existing cluster management mechanism.

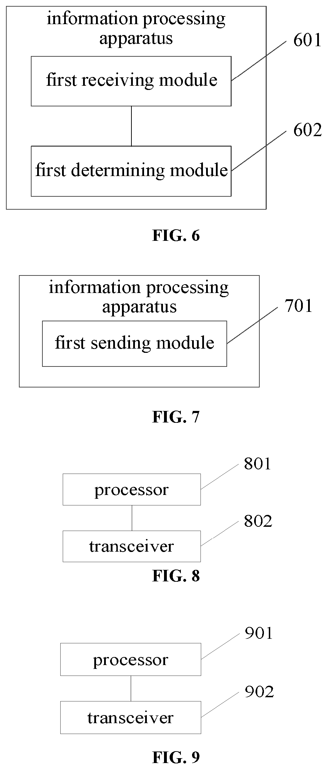

Referring to FIG. 6, FIG. 6 is a structural diagram of an information processing apparatus provided by an embodiment of the present disclosure, applied to an inter-cloud resource manager. As shown in FIG. 6, the information processing apparatus includes:
a first receiving module 601, configured to receive a first message, wherein the first message includes information of a first namespace and is used for creating the first namespace;
a first determining module 602, configured to determine, according to the first message and information of namespaces of clusters, whether a second namespace exists in the clusters, wherein information of the second namespace conflicts with the information of the first namespace.

Optionally, the apparatus may further include:
a first obtaining module, configured to obtain the information of the namespaces of the clusters.

Optionally, the first obtaining module is further configured to:
obtain the information of the namespaces of the clusters via API servers of the clusters, wherein the information of the namespaces of the clusters includes one or more of:
namespace information, available resource information of a cluster, a resource upper limit of the namespace, or information of actual running resource of the namespace.

Optionally, the namespace information includes one or more of:
a name of the namespace, a status of the namespace, or time since creation of the namespace.

Optionally, the information of the first namespace includes a name of the first namespace; the first determining module is further configured to determine, according to the first message and the information of the namespaces of the clusters, whether the second namespace exists in the clusters, wherein a name of the second namespace is identical to the name of the first namespace.

Optionally, the information of the first namespace further includes a resource upper limit of the first namespace; the apparatus further includes:
a second obtaining module, configured to, when the second namespace does not exist, determine information of remaining available resource of a first target cluster according to available resource information of the first target cluster and information of namespace of the first target cluster;
a first creation module, configured to, when it is determined that the remaining available resource of the first target cluster meets the resource upper limit of the first namespace, create the first namespace in the first target cluster.

Optionally, the apparatus may further include:
a first sending module, configured to, when the second namespace exists, send a second message;
wherein the second message is used for indicating that the second namespace exists in one or more clusters.

The apparatus provided in the embodiments of the present disclosure can execute the above method embodiments, and implementation principles and technical effects are similar, and details are not described herein again.

Referring to FIG. 7, FIG. 7 is a structural diagram of an information processing apparatus provided by an embodiment of the present disclosure, applied to a cluster. As shown in FIG. 7, the information processing apparatus includes:
a first sending module 701, configured to send information of namespace of the cluster to an inter-cloud resource manager, wherein the information of the namespace of the cluster is used by the inter-cloud resource manager to determine whether a second namespace exists in the cluster, information of the second namespace conflicts with information of a first namespace, and the information of the first namespace is carried in a first message used for creating the first namespace.

Optionally, the first sending module is further configured to:
obtain, via an etcd component in the cluster, the information of the namespace of the cluster from a controller manager;
send, via the etcd component, the information of the namespace of the cluster to an API server of the cluster;
send, via the API server, the information of the namespace of the cluster to the inter-cloud resource manager.

Optionally, the information of the namespace of the cluster includes one or more of:
namespace information, a resource upper limit of the namespace, or information of actual running resource of the namespace.

Optionally, the namespace information includes one or more of:
a name of the namespace, a status of the namespace, or time since creation of the namespace.

The apparatus provided in the embodiments of the present disclosure can execute the above method embodiments, and implementation principles and technical effects are similar, and details are not described herein again.

Referring to FIG. 8, FIG. 8 is a structural diagram of an information processing apparatus provided by an embodiment of the present disclosure, applied to an inter-cloud resource manager. As shown in FIG. 8, the information processing apparatus includes: a processor 801 and a transceiver 802;
wherein the transceiver 802 is configured to receive a first message, wherein the first message includes information of a first namespace and is used for creating the first namespace;
the processor 801 is configured to determine, according to the first message and information of namespaces of clusters, whether a second namespace exists in the clusters, wherein information of the second namespace conflicts with the information of the first namespace.

Optionally, the processor 801 is further configured to:
obtain the information of the namespaces of the clusters.

Optionally, the processor 801 is further configured to:
obtain the information of the namespaces of the clusters via API servers of the clusters, wherein the information of the namespaces of the clusters includes one or more of:
namespace information, available resource information of a cluster, a resource upper limit of the namespace, or information of actual running resource of the namespace.

Optionally, the namespace information includes one or more of:
a name of the namespace, a status of the namespace, or time since creation of the namespace.

Optionally, the information of the first namespace includes a name of the first namespace; optionally, the processor is further configured to:
determine, according to the first message and the information of the namespaces of the clusters, whether the second namespace exists in the clusters, wherein a name of the second namespace is identical to the name of the first namespace.

Optionally, the information of the first namespace further includes a resource upper limit of the first namespace; optionally, the processor is further configured to:
when the second namespace does not exist, determine information of remaining available resource of a first target cluster according to available resource information of the first target cluster and information of namespace of the first target cluster;
when it is determined that the remaining available resource of the first target cluster meets the resource upper limit of the first namespace, create the first namespace in the first target cluster.

Optionally, the processor 801 is further configured to:
when the second namespace exists, send a second message;
wherein the second message is used for indicating that the second namespace exists in one or more clusters.

The apparatus provided in the embodiments of the present disclosure can execute the above method embodiments, and implementation principles and technical effects are similar, and details are not described herein again.

Referring to FIG. 9, FIG. 9 is a structural diagram of an information processing apparatus provided by an embodiment of the present disclosure, applied to a cluster. As shown in FIG. 9, the information processing apparatus includes: a processor 901 and a transceiver 902;
wherein the transceiver 902 is configured to send information of namespace of the cluster to an inter-cloud resource manager, wherein the information of the namespace of the cluster is used by the inter-cloud resource manager to determine whether a second namespace exists in the cluster, information of the second namespace conflicts with information of a first namespace, and the information of the first namespace is carried in a first message used for creating the first namespace.

Optionally, the transceiver 902 is further configured to:
obtain, via an etcd component in the cluster, the information of the namespace of the cluster from a controller manager;
send, via the etcd component, the information of the namespace of the cluster to an API server of the cluster;
send, via the API server, the information of the namespace of the cluster to the inter-cloud resource manager.

Optionally, the information of the namespace of the cluster includes one or more of:
namespace information, a resource upper limit of the namespace, or information of actual running resource of the namespace.

Optionally, the namespace information includes one or more of:
a name of the namespace, a status of the namespace, or time since creation of the namespace.

The apparatus provided in the embodiments of the present disclosure can execute the above method embodiments, and implementation principles and technical effects are similar, and details are not described herein again.

It should be noted that the division of units in the embodiments of the present disclosure is schematic and is only a logical function division. In actual implementation, there may be other division methods. In addition, each functional unit in various embodiments of the present disclosure may be integrated into one processing unit, or each unit may exist physically alone, or two or more units may be integrated into one unit. The above integrated units can be implemented in the form of hardware or software functional units.

If the integrated unit is implemented in the form of a software functional unit and sold or used as an independent product, it may be stored in a processor-readable storage medium. Based on such an understanding, essential parts, or parts contributing to the prior art, or the entirety or parts of the technical solution of the present disclosure may be implemented in a form of a software product. The computer software product is stored in a storage medium, and includes several instructions to cause a computer device (which can be a personal computer, a server, or a network device, etc.) or a processor to execute all or part of the steps of the methods described in various embodiments of the present disclosure. The aforementioned storage media include: U disk, removable hard disk, Read-Only Memory (ROM), Random Access Memory (RAM), magnetic disk or optical disc and other media that can store program code.

An embodiment of the present disclosure provides a communication device, including: a memory, a processor, and a program stored in the memory and executable on the processor; wherein the processor is configured to read the program stored in the memory to implement the steps of the information processing method as described above.

An embodiment of the present disclosure further provides a readable storage medium storing a program, wherein when the program is executed by a processor, processes of the information processing method embodiments described above are implemented and same technical effects are achieved. To avoid repetition, details are not described herein again. The readable storage medium may be any available medium or data storage device accessible by a processor, including but not limited to: a magnetic storage (such as a floppy disk, a hard disk, a magnetic tape, a magneto-optical disk), an optical storage (such as a Compact Disc (CD), a Digital Video Disc (DVD), a Blu-ray Disc (BD), a High-definition Versatile Disc (HVD)), and a semiconductor storage (such as a ROM, an Erasable Programmable Read Only Memory (EPROM), an Electrically Erasable Programmable Read-Only Memory (EEPROM), a NAND FLASH, or a Solid State Disk (SSD)).

It should be noted that, as used herein, the terms "include", "including" or any other variation thereof are intended to cover non-exclusive inclusion, such that a process, method, article, or apparatus that includes a list of elements includes not only those elements but also other elements not expressly listed, or also includes elements inherent to such process, method, article, or apparatus. Without further limitation, an element defined by the phrase "including one..." does not preclude the presence of another identical element in the process, method, article, or apparatus that includes the element.

From the description of the above implementations, a person skilled in the art can clearly understand that the methods in the above embodiments can be implemented by means of software plus a necessary general hardware platform, and certainly can also be implemented by hardware, but in many cases, the former is a better implementation. Based on such understanding, the technical solutions of the present disclosure essentially or the part contributing to the prior art may be embodied in the form of a software product. The computer software product is stored in a storage medium (such as ROM/RAM, magnetic disk, optical disk) and includes several instructions for causing a terminal (which may be a mobile phone, a computer, a server, an air conditioner, or a network device, etc.) to execute the methods described in the embodiments of the present disclosure.

The embodiments of the present disclosure have been described above with reference to the accompanying drawings, but the present disclosure is not limited to the specific implementations described above. The specific implementations described above are merely illustrative, not restrictive. Under the teaching of the present disclosure, a person of ordinary skill in the art may make many forms without departing from the spirit of the present disclosure and the scope protected by the claims, all of which fall within the protection of the present disclosure.

## Claims

1. An information processing method, applied to an inter-cloud resource manager, the method comprising:
receiving a first message, wherein the first message comprises information of a first namespace and is used for creating the first namespace;
determining, according to the first message and information of namespaces of clusters, whether a second namespace exists in the clusters, wherein information of the second namespace conflicts with the information of the first namespace.

2. The method according to claim 1, further comprising:
obtaining the information of the namespaces of the clusters and/or available resource information of the clusters.

3. The method according to claim 2, wherein obtaining the information of the namespaces of the clusters comprises:
obtaining the information of the namespaces of the clusters via Application Programming Interface (API) servers of the clusters.

4. The method according to claim 1, wherein the information of the first namespace comprises a name of the first namespace;
determining, according to the first message and the information of the namespaces of the clusters, whether the second namespace exists in the clusters comprises:
determining, according to the first message and the information of the namespaces of the clusters, whether the second namespace exists in the clusters, wherein a name of the second namespace is identical to the name of the first namespace.

5. The method according to claim 4, wherein the information of the first namespace further comprises a resource upper limit of the first namespace; the method further comprises:
when the second namespace does not exist, determining information of remaining available resource of a first target cluster according to available resource information of the first target cluster and information of namespace of the first target cluster, wherein the first target cluster is one or more of the clusters;
when it is determined that the remaining available resource of the first target cluster meets the resource upper limit of the first namespace, creating the first namespace in the first target cluster.

6. The method according to any one of claims 1-5, wherein the information of the namespaces of the clusters comprises one or more of:
namespace information, a resource upper limit of the namespace, or information of actual running resource of the namespace.

7. The method according to claim 6, wherein the namespace information comprises one or more of:
a name of the namespace, a status of the namespace, or time since creation of the namespace.

8. The method according to claim 4, further comprising:
when the second namespace exists, sending a second message;
wherein the second message is used for indicating that the second namespace exists in one or more clusters.

9. An information processing method, applied to a cluster, the method comprising:
sending information of namespace of the cluster to an inter-cloud resource manager, wherein the information of the namespace of the cluster is used by the inter-cloud resource manager to determine whether a second namespace exists in the cluster, information of the second namespace conflicts with information of a first namespace, and the information of the first namespace is carried in a first message used for creating the first namespace.

10. The method according to claim 9, wherein sending the information of the namespace of the cluster to the inter-cloud resource manager comprises:
obtaining, via an etcd component in the cluster, the information of the namespace of the cluster from a controller manager;
sending, via the etcd component, the information of the namespace of the cluster to an API server of the cluster;
sending, via the API server, the information of the namespace of the cluster to the inter-cloud resource manager.

11. The method according to claim 9 or 10, wherein the information of the namespace of the cluster comprises one or more of:
namespace information, a resource upper limit of the namespace, or information of actual running resource of the namespace.

12. The method according to claim 11, wherein the namespace information comprises one or more of:
a name of the namespace, a status of the namespace, or time since creation of the namespace.

13. An information processing apparatus, applied to an inter-cloud resource manager, the apparatus comprising:
a first receiving module, configured to receive a first message, wherein the first message comprises information of a first namespace and is used for creating the first namespace;
a first determining module, configured to determine, according to the first message and information of namespaces of clusters, whether a second namespace exists in the clusters, wherein information of the second namespace conflicts with the information of the first namespace.

14. An information processing apparatus, applied to a cluster, the apparatus comprising:
a first sending module, configured to send information of namespace of the cluster to an inter-cloud resource manager, wherein the information of the namespace of the cluster is used by the inter-cloud resource manager to determine whether a second namespace exists in the cluster, information of the second namespace conflicts with information of a first namespace, and the information of the first namespace is carried in a first message used for creating the first namespace.

15. An information processing apparatus, applied to an inter-cloud resource manager, the apparatus comprising: a processor and a transceiver;
wherein the transceiver is configured to receive a first message, wherein the first message comprises information of a first namespace and is used for creating the first namespace;
the processor is configured to determine, according to the first message and information of namespaces of clusters, whether a second namespace exists in the clusters, wherein information of the second namespace conflicts with the information of the first namespace.

16. An information processing apparatus, applied to a cluster, the apparatus comprising: a processor and a transceiver;
wherein the transceiver is configured to send information of namespace of the cluster to an inter-cloud resource manager, wherein the information of the namespace of the cluster is used by the inter-cloud resource manager to determine whether a second namespace exists in the cluster, information of the second namespace conflicts with information of a first namespace, and the information of the first namespace is carried in a first message used for creating the first namespace.

17. A communication device, comprising: a memory, a processor, and a program stored in the memory and executable on the processor; wherein the processor is configured to read the program stored in the memory to implement steps of the information processing method according to any one of claims 1 to 12.

18. A readable storage medium, configured to store a program, wherein the program, when executed by a processor, implements steps of the information processing method according to any one of claims 1 to 12.
